# EUROPEAN PATENT APPLICATION

(11) **EP 2 869 255 A1**
(43) Date of publication of application: **06.05.2015**
(21) Application number: 14191678.3
(22) Date of filing: 04.11.2014
(51) Int. Cl.: G06Q 20/32

(54) **Method and system of utilizing mobile phone location to manage card acceptance**

(30) Priority: 05.11.2013 US 201314072131
(71) Applicant: MasterCard International Incorporated, Purchase, NY 10577-2405 (US)
(72) Inventor: van den Broeck, Rigo, 1852 Grimbergen (BE); Baugnies, Bruno, 1495 Sart-Dames-Avelines (BE); Logies, Nicole, 61479 Glashuetten-Schlossborn (DE); White, Graham, Billericay, Essex CM12 0ER (GB); Dessy, Benjamin, 1341 Ceroux (BE)
(74) Representative: Edlund, Fabian

(57) **Abstract**

A financial transaction method that includes receiving at a geolocation authentication module, a request from a managing computer system storing data associating identification information of individual mobile devices with individual payment card accounts, the request originating from a merchant and includes data identifying the geographic origin of the request for authorization against the payment card account of the customer; identifying a mobile device associated with the payment card account against which the request for authorization has been received; requesting data identifying a current geographic location of the at least one mobile device associated with the payment card account from a mobile device service provider, the mobile device service provider storing data identifying the current geographic location of the mobile device associated with the payment card account; and receiving, from the mobile device service provider, the data identifying the geographic location of the mobile device associated with the payment card account.

## Description

### BACKGROUND

### FIELD

The present system and method relate to authorizing payment card transactions based on a mobile device being substantially co-located with the location where a payment card transaction is initiated. The geographic location information of the mobile device is pre-stored in a memory device managed by a mobile device geolocation service provider in a manner that can be easily accessed by a geolocation authentication module which can then provide the information to the payment network of the payment card.

### BRIEF DESCRIPTION OF THE RELATED ART

One of the more recurrent problems within the payment card industry is the management of fraud in the use of payment cards. In fact, a significant portion of card fraud is counterfeit fraud, which involves counterfeit (e.g., cloned) payment cards being used fraudulently at ATMs and/or points of sale (POS), often in a foreign country relative to the card holder's home country. To address this problem, card payment providers sometimes deny transactions from countries where such fraud is common unless the cardholder alerts the payment card issuer of his travels to that country. This can be inconvenient to the cardholder. For instance, when a cardholder travels to a country where counterfeit fraud is currently a problem, it may be that his or her transactions are denied unless the card issuer has been informed or knows of his or her travels.

On a different note, consumers currently have access to a range of personal devices (such as cellphones, GPS devices, personal computers, etc.), which are able to identify (to varying levels of accuracy) the geographic location (based on either of or a mix of GPS systems, mobile phone cell-phone towers, Wi-Fi hot-spots, IP addresses, etc.). In this respect, a number of software applications are available in the market which offer consumers with customized services based on the location information enabled on their mobile device. For example: (1) MasterCard International Incorporated, the assignee of the present disclosure, has an iPhone application to locate the nearest ATM based on the geolocation information provided by the phone; (2) MasterCard provides location-based card controls based on the location of the payment transaction on the card (*e.g*., country or event, merchant or POS); (3) some providers have applications on mobile devices that enable users to search for products and services based on the location information (*e.g*., to find a restaurant); and (4) other services enable an application enable a network of "friends" or "family" to share location based information and, for example, to find friends in the vicinity of the mobile device or to be alerted when a friend arrive nearby (*e.g*., in the same city, for example).

Incorporated herein by reference in their entirety are U.S. Application Serial No. 12/544,009 (U.S. Patent Publication No. 2011/0047075) filed on August 19, 2009; U.S. Application Serial No. 13/444,263 filed on April 11, 2012; and Application Serial No. 13/777,945 filed on February 26, 2013. These are examples of geolocation based controls.

### SUMMARY

A financial transaction method, including: receiving at a geolocation authentication module, a request from a managing computer system that includes a memory device configured to store data associating identification information of individual mobile devices with individual payment card accounts, and a computer processor, the request originating from a merchant that requests authorization of a payment card transaction against a payment card account of a customer, and the request includes data identifying the geographic origin of the request for authorization against the payment card account of the customer; identifying, in the geolocation authentication module, at least one mobile device associated with the payment card account against which the request for authorization has been received; requesting, by the geolocation authentication module, data identifying a current geographic location of the at least one mobile device associated with the payment card account from a mobile device service provider, a memory device of the mobile device service provider storing data identifying a current geographic location of a plurality of mobile devices, including the current geographic location of the at least one mobile device associated with the payment card account; receiving, from a transmitting device of the mobile device service provider, the data identifying the geographic location of the at least one mobile device associated with the payment card account, in the geolocation authentication module in response to the request from the geolocation authentication module; and determining, in the geolocation authentication module, whether the geographic origin of the authorization request matches the geographic location of the at least one mobile device associated with the payment card account received from the mobile device service provider.

A financial transaction system includes: a managing computer system that includes a memory device configured to store data associating identification information of individual mobile devices with individual payment card accounts, and a computer processor. The financial transaction system also includes a mobile device service provider, including a memory device configured to store data identifying a current geographic location of a plurality of mobile devices, including a geographic location of at least one mobile device associated with a payment card account of a customer; and a geolocation authentication module. The geolocation authentication module is configured to: receive a request from the managing computer system, the request originating from a merchant that requests authorization of a payment card transaction against the payment card account of the customer, and the request includes data identifying the geographic origin of the request for authorization against the payment card account of the customer; identify the at least one mobile device associated with the payment card account against which the request for authorization has been received; and request the data identifying the current geographic location of the at least one mobile device associated with the payment card account from the mobile device service provider. The geolocation authentication module is also configured to: receive, from a transmitting device of the mobile device service provider, the data identifying the geographic location of the at least one mobile device associated with the payment card account, in response to the request; and determine whether the geographic origin of the authorization request matches the geographic location of the at least one mobile device associated with the payment card account received from the mobile device service provider.

The invention may be summarized as follows:
(A) A financial transaction method, comprising: receiving at a geolocation authentication module, a request from a managing computer system that includes a memory device configured to store data associating identification information of individual mobile devices with individual payment card accounts, and a computer processor, the request originating from a merchant that requests authorization of a payment card transaction against a payment card account of a customer, and the request includes data identifying the geographic origin of the request for authorization against the payment card account of the customer; identifying, in the geolocation authentication module, at least one mobile device associated with the payment card account against which the request for authorization has been received; requesting, by the geolocation authentication module, data identifying a current geographic location of the at least one mobile device associated with the payment card account from a mobile device service provider, a memory device of the mobile device service provider storing data identifying a current geographic location of a plurality of mobile devices, including the current geographic location of the at least one mobile device associated with the payment card account; receiving, from a transmitting device of the mobile device service provider, the data identifying the geographic location of the at least one mobile device associated with the payment card account, in the geolocation authentication module in response to the request from the geolocation authentication module; and determining, in the geolocation authentication module, whether the geographic origin of the authorization request matches the geographic location of the at least one mobile device associated with the payment card account received from the mobile device service provider.
(B) The financial transaction method of (A), further comprising: permitting the payment card transaction to be processed for authorization when the geographic origin of the authorization request matches the geographic location of the at least one mobile device.
(C) The financial transaction method of (B), further comprising: taking action to permit denying of the authorization request for the transaction to be processed for authorization when the geographic origin of the request does not match the geographic location of the at least one mobile device.
(D) The financial transaction method of (A), wherein the geolocation authentication module is located at a fraud control center.
(E) The financial transaction method of (A), wherein the geolocation authentication module is hosted by Electronic Merchant Services (EMS).
(F) The financial transaction method of (A), wherein during the determining, in the geolocation authentication module, of whether the geographic origin of the authorization request matches the geographic location of the at least one mobile device associated with the payment card account received from the mobile device service provider, a country where the at least one mobile device is compared to a country where the authorization request originated and other filters or conditions.
(G) The financial transaction method of (A), wherein the requesting, by the geolocation authentication module, of the geographic location of the at least one mobile device associated with the payment card account from the memory device of the mobile device service provider is via an API (Application Programming Interface).
(H) The financial transaction method of (C), wherein the memory device of the mobile device service provider receives current geographic locations of the plurality of mobile devices from transmissions sent from the plurality of mobile devices.
(I) The financial transaction method of (A), wherein the storing of the current geographic locations of the plurality of mobile devices and the current geographic location of the at least one mobile device associated with the payment card account in the memory device of the mobile device service provider is preformed prior to the requesting of the geographic location of the at least one mobile device associated with the payment card account from the memory device of the mobile device service provider.
(J) The financial transaction method of (A), wherein when the geographic location of the at least one mobile device associated with the payment card account is requested from the memory device of the mobile device service provider, the mobile service provider does not send a request to the at least one mobile device for the geographic location.
(K) The financial transaction method of (A), wherein the retrieving of the geographic location of the at least one mobile device associated with the payment card account from the geolocation authentication module takes approximately 50 ms.
(L) The financial transaction method of (A), wherein the retrieving of the geographic location of the at least one mobile device associated with the payment card account from the geolocation authentication module takes 50 ms or less.
(M) The financial transaction method of (A), wherein the geographic location of the at least one mobile device associated with the payment card account that is sent to the geolocation authentication module includes a mobile country code or a country name.
(N) The financial transaction method of (A), further comprising: sending a fraud alert SMS to at least one mobile device of the customer from the geolocation authentication module via the mobile device service provider.
(A') A financial transaction system, comprising: a managing computer system that includes a memory device configured to store data associating identification information of individual mobile devices with individual payment card accounts, and a computer processor; a mobile device service provider, including a memory device configured to store data identifying a current geographic location of a plurality of mobile devices, including a geographic location of at least one mobile device associated with a payment card account of a customer; and a geolocation authentication module configured to: receive a request from the managing computer system, the request originating from a merchant that requests authorization of a payment card transaction against the payment card account of the customer, and the request includes data identifying the geographic origin of the request for authorization against the payment card account of the customer; identify the at least one mobile device associated with the payment card account against which the request for authorization has been received; request the data identifying the current geographic location of the at least one mobile device associated with the payment card account from the mobile device service provider; receive, from a transmitting device of the mobile device service provider, the data identifying the geographic location of the at least one mobile device associated with the payment card account, in response to the request; and determine whether the geographic origin of the authorization request matches the geographic location of the at least one mobile device associated with the payment card account received from the mobile device service provider.
(B') The financial transaction system of (A'), wherein the geolocation authentication module is further configured to permit the payment card transaction to be processed for authorization when the geographic origin of the authorization request matches the geographic location of the at least one mobile device.
(C') The financial transaction system of (B'), wherein the geolocation authentication module is further configured to take action to permit denying of the authorization request for the transaction to be processed for authorization when the geographic origin of the request does not match the geographic location of the at least one mobile device.
(D') The financial transaction system of (A'), wherein the geolocation authentication module is located at a fraud control center.
(E') The financial transaction system of (A'), wherein the geolocation authentication module is hosted by Electronic Merchant Services (EMS).
(F') The financial transaction system of (A'), wherein when the geolocation authentication module determines whether the geographic origin of the authorization request matches the geographic location of the at least one mobile device associated with the payment card account received from the mobile device service provider, a country where the at least one mobile device is compared to a country where the authorization request originated and other filters or conditions.
(G') The financial transaction system of (A'), wherein the request, by the geolocation authentication module, of the geographic location of the at least one mobile device associated with the payment card account from the memory device of the mobile device service provider is via an API (Application Programming Interface).
(H') The financial transaction system of (C'), wherein the memory device of the mobile device service provider receives current geographic locations of the plurality of mobile devices from transmissions sent from the plurality of mobile devices.
(I') The financial transaction system of (A'), wherein storing of the current geographic locations of the plurality of mobile devices and the current geographic location of the at least one mobile device associated with the payment card account in the memory device of the mobile device service provider is preformed prior to the request of the geographic location of the at least one mobile device associated with the payment card account from the memory device of the mobile device service provider.
(J') The financial transaction system of (A'), wherein when the geographic location of the at least one mobile device associated with the payment card account is requested from the memory device of the mobile device service provider, the mobile service provider does not send a request to the at least one mobile device for the geographic location.
(K') The financial transaction system of (A'), wherein the geolocation authentication module is configured to retrieve the geographic location of the at least one mobile device associated with the payment card account from the geolocation authentication module in approximately 50 ms.
(L') The financial transaction system of (A'), wherein the geolocation authentication module is configured to retrieve the geographic location of the at least one mobile device associated with the payment card account from the geolocation authentication module in 50 ms or less.
(M') The financial transaction system of (A'), wherein the geographic location of the at least one mobile device associated with the payment card account that is sent to the geolocation authentication module includes a mobile country code or a country name.
(N') The financial transaction system of (A'), wherein the geolocation authentication module is configured to send a fraud alert SMS to at least one mobile device of the customer via the mobile device service provider.

These and other exemplary features and advantages of particular embodiments of the location payment card transaction control method and system will now be described by way of exemplary embodiments to which they are not limited.

### BRIEF DESCRIPTION OF THE DRAWINGS

The scope of the present disclosure is best understood from the following detailed description of exemplary embodiments when read in conjunction with the accompanying drawings. Included in the drawings are the following figures:
Figure 1 illustrates a high level diagram of a system architecture that may be employed in accordance with an exemplary embodiment;
Figure 2 is a block diagram illustrating a hardware architecture of a managing computer system or a geolocation authentication module in accordance with an exemplary embodiment;
Figure 3 is a flow chart illustrating an exemplary method of an embodiment; and
Figure 4 is a block diagram illustrating a computer system architecture in accordance with an exemplary embodiment.

Further areas of applicability of the present disclosure will become apparent from the detailed description provided hereinafter. It should be understood that the detailed description of exemplary embodiments are intended for illustration purposes only and are, therefore, not intended to necessarily limit the scope of the disclosure.

### DETAILED DESCRIPTION

This description provides exemplary embodiments only, and is not intended to limit the scope, applicability or configuration of the invention. Rather, the ensuing description of the embodiments will provide those skilled in the art with an enabling description for implementing embodiments of the disclosed methods and systems. Various changes may be made in the function and arrangement of elements without departing from the spirit and scope of the invention as set forth in the appended claims. Thus, various embodiments may omit, substitute, or add various procedures or components as appropriate. For instance, it should be appreciated that in alternative embodiments, the methods may be performed in an order different than that described, and that various steps may be added, omitted or combined. Also, features described with respect to certain embodiments may be combined in various other embodiments. Different aspects and elements of the embodiments may be combined in a similar manner.

### Definition of Terms

Payment Network - A system or network used for the transfer of money via the use of cash-substitutes. Payment networks may use a variety of different protocols and procedures in order to process the transfer of money for various types of transactions. Transactions that may be performed via a payment network may include product or service purchases, credit purchases, debit transactions, fund transfers, account withdrawals, etc. Payment networks may be configured to perform transactions via cash-substitutes, which may include payment cards, letters of credit, checks, financial accounts, etc. Examples of networks or systems configured to perform as payment networks include those operated by MasterCard^{®}, VISA^{®}, Discover^{®}, American Express^{®}, etc.

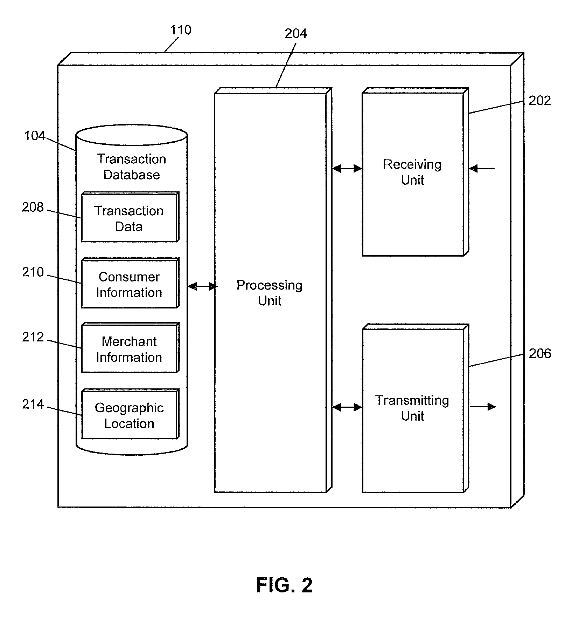

Personally identifiable information (PII) - PII may include information that may be used, alone or in conjunction with other sources, to uniquely identify a single individual. Information that may be considered personally identifiable may be defined by a third party, such as a governmental agency (e.g., the U.S. Federal Trade Commission, the European Commission, etc.), a non-governmental organization (e.g., the Electronic Frontier Foundation), industry custom, consumers (e.g., through consumer surveys, contracts, etc.), codified laws, regulations, or statutes, etc. Systems and methods apparent to persons having skill in the art for rendering potentially personally identifiable information anonymous may be used, such as bucketing. Bucketing may include aggregating information that may otherwise be personally identifiable (e.g., age, income, etc.) into a bucket (e.g., grouping) in order to render the information not personally identifiable. For example, a consumer of age 26 with an income of $65,000, which may otherwise be unique in a particular circumstance to that consumer, may be represented by an age bucket for ages 21-30 and an income bucket for incomes $50,000 to $74,999, which may represent a large portion of additional consumers and thus, is no longer personally identifiable to that consumer. In other embodiments, encryption may be used. For example, personally identifiable information (e.g., an account number) may be encrypted (e.g., using a one-way encryption) such that the processing server 110 (shown in Figure 2) may not possess the PII or be able to decrypt encrypted PII.

Current geographic location- The most recently reported location within a time frame determined by the circumstances (e.g., the level of certainty in determining an accurate location). For instance, for a low value transaction, the relevant timeframe might be hours or even days. Other possible weighted variables can include historically based rating or reputation for fraud in a region or location, the type and character of the merchant, the type of transactions, and virtually any other factor that gives rise to comfort or heightened concern over the authenticity of a transaction. Further, the current location can be based on an extrapolated position, e.g., the location changes coextensively with a railway line at a certain rate. Other predictive methodologies can be used (e.g., line of movement, indicators of destination, etc.) to extrapolate location, with predicted locations possibly being given less weight than measure locations.

"Financial card" or "payment card"- These cards can include, for example, a magnetic stripe bearing card, smart card, magnetic stripe and smart card combination, prepaid card, credit card, debit card, charge card, combination credit/debit card, , merchant card, or any other card suitable for a cardholder to use to make purchases of goods and/or services. Also, as used herein, the terms "cardholder," "card user," and "card recipient" can be used interchangeably and can include any user (actual person, corporation, or other legal entity) making purchases of goods and/or services. Further, as used herein in, the term "issuer" or can include, for example, a financial institution (i.e., bank) issuing a card, a merchant issuing a merchant specific card, a stand-in processor configured to act on-behalf of the card-issuer, or any other suitable institution configured to issue a financial card.

### Description of the Embodiments

The method and system for location controls on the payment card transactions will now be described by reference to the accompanying drawings in which like elements are described with like figure numbers. It should be noted that the claimed invention is not limited to these particular embodiments but rather fully encompasses variations and modifications which may occur to those skilled in the art.

The present disclosure provides a financial transaction system and method utilizing a mobile device as a locator to manage payment card acceptance, and geographic location information of the mobile device is pre-stored in a memory device managed by a mobile device service provider. Thus, a payment network (e.g., MasterCard) can avoid the need to continually receive location information of cardholder mobile devices, depending on implementation. The mobile device service provider stores the geographic location information for its own purposes (e.g., for connecting calls, determining cell phone towers that are close to the mobile device, etc.). The presently disclosed systems and methods are able to tap into the storage of a mobile device service provider(s) and use the stored data that is typically only used for cellular communications purposes. The location data that is stored by the mobile device service provider is utilized for fraud control by using the location of one or more mobile devices of the payment card holder and comparing this location with the location of the point of sale in which a purchase or transaction takes place. Thus, the payment network can quickly obtain the geographic location of the user's mobile devices as the information is already stored by the mobile device service provider. Depending on implementation, the mobile device service provider can provide the geographic location information of one or more mobile devices of the payment card holder at millisecond speeds.

Hence, depending on implementation, a potential advantageous feature of the disclosed system and method is that the mobile device location information is accessible in shorter time frames (e.g., milliseconds) than would likely occur sending an inquiry from the payment network directly to the mobile device.

Depending on the embodiment, the card location controls disclosed herein can provide consumers with a service to manage location-based controls on their payment card or cards linked to a mobile device or devices that have geolocation capabilities.

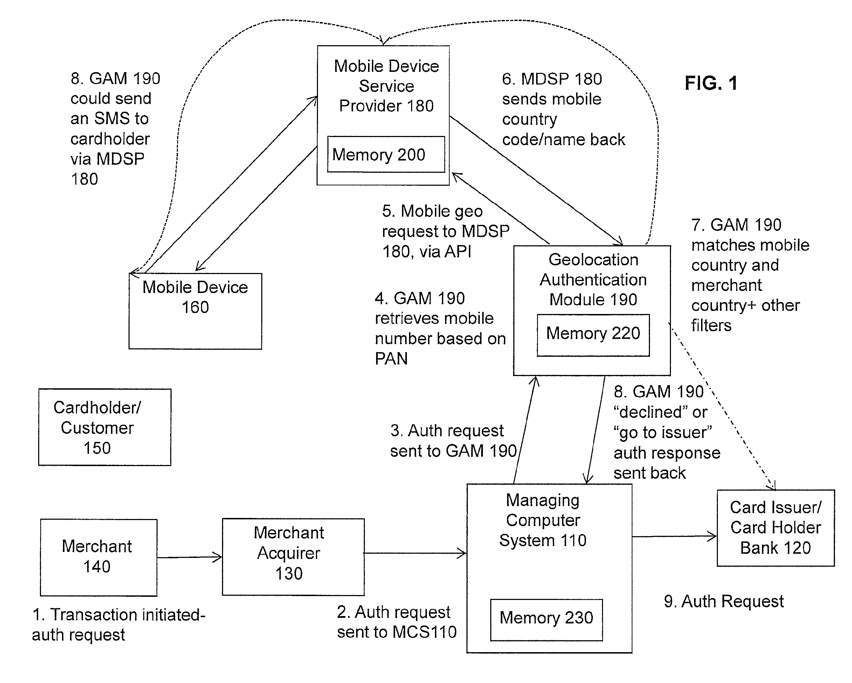

With reference to Figure 1, in exemplary embodiments, cardholders 150 (and/or banks or card issuers 120) can be provided with access to a management platform, e.g., managing computer system 110, to set and manage card controls via a software application that consumers can install, or can be installed by the manufacturer or provider of the mobile device 160, on mobile devices with geolocation based capabilities. The management computer system 110 may also be accessed via an internet browser on a computer or nearly any Internet enabled mobile device.

An exemplary mobile device application would enable consumers or issuers with the consumer's permission to perform one or more of the following:
- Register one or multiple mobile devices 160 into the card management computer system 110;
- Associate (e.g., link) one or more mobile devices 160 to one or multiple payment cards; and
- Set location based controls on the payment cards, by way of non-limiting examples.

The application may further enable consumers 150 (and/or banks and/or card issuers 120) to perform one or more of the following:
- Define personal or custom location areas or other location based criteria, such as, but not limited to: home location (e.g., city and country or other recognized geographic locations), usual destinations (e.g., cities, countries, etc. for work or play), etc.;
- Define personal or custom control profiles, such as, but not limited to: "at home", "at school", "at work", "traveling", etc., which include custom controls designed by the cardholder related to the geographic location information identified by the profile name; and
- Associate different "personal locations" to "personal control profiles" such that when the mobile device reports a current location identified in a "personal locations" data file, the associated "personal control profiles" can be automatically invoked, as some additional non-limiting examples.

Exemplary types of card location-based controls can in certain embodiments include the ability for consumers 150 (and/or banks or card issuers 120) to set one or more of the following:
- Authorization locks (enable / disable card transactions based on location);
- Authorization limits (maximum spend or maximum number of transactions based on location);
- Scoring a transaction as to its potential for being fraudulent; and
- Transaction alerts (e.g., sent over TCP/IP networks, SMS, e-mail, software alerts, etc.) based on location.

As disclosed herein, the present method and system for providing location control on payment card use involves a mechanism by which, depending on particular embodiments, one or more of these problems may be avoided or mitigated, while, depending on the particular embodiments, providing additional opportunities for the customer or cardholder to impose their own location controls, as well as potentially other user-defined controls, on the use of their real payment number (RPN), or a pseudo card number or control payment number (CPN), as the case may be.

Research indicates that cardholders want increased control over their payment cards. Providing location-based card controls to consumers can add value to existing card-based control capabilities. Additionally, the presently disclosed method and system will facilitate efforts to continue to use mobile devices as contactless cards for payment card transactions, and as person-to-person payment mechanisms.

Enabling banks and card issuers to offer card control services based on cardholders' geolocation information provided by cardholder's mobile device or mobile device service provider would provide an ability to manage fraud via geolocation based card controls depending on the particulars of the embodiment. This service, for instance, could enable banks and card issuers to manage fraud limits, impose blocks or generate alerts based on location information. Thus, the method and system could greatly increase the accuracy of fraud detection and prevention in certain exemplary embodiments. For example, the method and system could enable issuers to decline a payment card transaction if the country of the merchant (as identified in the card transaction information) is different from the country where the consumer is reported to be (as identified by the information provided to the managing computer system by a mobile device service provider via a geolocation authentication module).

### Exemplary System Architecture

Figure 1 illustrates a financial transaction system that includes a managing computer system 110. The managing computer system 110 includes a memory device 230 configured to store data associating identification information of individual mobile devices with individual payment card accounts. The memory device 230 may be any form of data storage device including, but not limited to, electronic, magnetic, optical recording mechanisms, combinations thereof, or any other form of memory device capable of storing data that associates identification information of an individual mobile device, such as mobile device 160 associated with a customer 150 with individual payment card accounts issued by a card issuer 120 to a cardholder. It is noted that as used herein, a customer 150 may be the cardholder or an authorized user of the payment card who is not the cardholder. The authorization request from the merchant 140 includes various data regarding the identity of the payment card account, the type and amount of the transaction, merchant data information, and additionally, the geographic origin of the request for authorization. This geographic origin of the request for authorization may be generated by a merchant terminal (interface) at a fixed location for card-present transactions, or from information received during a transaction regarding the customer's IP (internet protocol) address, computer identification that indicates the location of the computer, such as the customer's home computer or business desk-top computer that the customer had previously identified as being associated or linked with the payment card account, or nearly any other form of information that would tend to identify the geographic origin of the request for authorization.

Figure 1 also shows a mobile device service provider 180 that includes a memory device 200, or a plurality of memory devices, configured to store data identifying a current geographic location of a plurality of mobile devices, including a geographic location of at least one mobile device 160 associated with a payment card account of a customer 150. The mobile device service provider 180 could be any entity (e.g., AT&T^{®}, T-Mobile ^{®}, Verizon^{®}) that provides telecommunications (including data or voice and data) services for a mobile device 160, such as a cell phone, tablet, etc.

The system of Figure 1 further includes a geolocation authentication module (GAM) 190 that is configured to receive an authorization request from the managing computer system 110. The request that is sent to the geolocation authentication module 190 originates from a merchant 140, or merchant acquirer 130, that requests authorization of a payment card transaction against the payment card account of the customer 150. The request includes data identifying the geographic origin of the request for authorization against the payment card account of the customer 150. The merchant acquirer 130 is typically the merchant's bank. The merchant acquirer 130 receives transaction authorization requests, which are then forwarded on to the managing computer system 110 either directly or through at least one other party (e.g., the card issuer 120). It should be noted here that the managing computer system 110 can be part of the merchant acquirer 130, but because there are typically multiple merchant acquirers 130 and various intermediaries and stand-ins that can receive transactions for a given payment card account in most circumstances, it might be preferable depending on circumstances for the managing computer system 110 not to be part thereof. The managing computer system 110 can be part of the card issuer 120, or be an intermediary, as shown in Figure 1.

The geolocation authentication module 190 includes a memory device 220. The geolocation authentication module 190 is further configured to identify the at least one mobile device 160 associated with the payment card account against which the request for authorization has been received. In addition, the geolocation authentication module 190 is configured to request the data identifying the current geographic location of the at least one mobile device 160 associated with the payment card account from the mobile device service provider 180. In addition, the geolocation authentication module 190, shown in Figure 1, is configured to receive, from a transmitting device of the mobile device service provider 180, the data identifying the geographic location of the at least one mobile device 160 associated with the payment card account, in response to the request. The transmitting device of the mobile service provider 180 can be any transmitting device capable of transmitting data to a destination device.

The geolocation authentication module 190 could also be part of the managing computer system 110, part of the mobile device service provider 180, or separate from the managing computer system 110 and mobile device service provider 180 as shown in Figure 1. The geographic location information of many mobile devices are stored in a memory device 200 managed by (or located in) the mobile device service provider 180. The mobile device service provider 180 stores the geographic location information for its own business/technical purposes (e.g., for connecting calls, determining cell phone towers that are close to the mobile device, determining long distance charges, etc.) and thus, stores the information for reasons that are unrelated to fraud control purposes regarding payment cards. Because the location information is already collected and stored by the mobile device service provider 180, a payment network can avoid the need to directly obtain this information themselves by continually receiving and monitoring location information of cardholder mobile devices, depending on implementation.

The geolocation authentication module 190 typically only requests the location information of mobile devices belonging to payment card holders of issuers that offer such a service, and perhaps a subset of individuals (e.g., people who travel frequently, people who opt into a service in which their location information will be checked more frequently, people identified as possible targets of identity theft or fraud, etc.) in order to minimize the amount of data received, bandwidth used, speed of acquisition of the data, etc. For individuals who do not travel or do not travel frequently, the location of their mobile device will generally not vary widely and thus, their location information does not need to be updated frequently. However, for frequent travelers, it may be advantageous for the geolocation authentication module 190 to receive updated location information more frequently, and thus, the geolocation authentication module 190 can request the location information from the mobile device service provider 180 more frequently. Thus, for select cardholders, the location data of the mobile devices of the select cardholders can be frequently transferred from the mobile device service provider 180 to the geolocation authentication module 190. The geolocation authentication module 190 can be configured to selectively pull location data on a cardholder by cardholder basis, in predefined groups or categories, based on profiles, weighted risk factors, manual input, or nearly any other relevant factor, from the mobile device service provider 180, at a frequency determined by these potentially weighted risk factors. Thus, the location information is more likely to be appropriately accurate and sufficiently readily available to be used for comparison with the location information of the transaction within the limited timeframes permitted for completing an authorization request, often measured in double digit milliseconds.

More frequent updates for a limited number of select cardholders avoids a need to receive the location information pertaining to all of the cardholders during all updates. For example, it is possible that the location information of all cardholding users' mobile devices is transferred from the mobile device service provider 180 to the geolocation authentication module 190 daily, whereas select individuals have their location information transferred from the mobile device service provider 180 to the geolocation authentication module 190 more frequently (e.g., hourly, twice a day, etc.).

The geolocation authentication module 190 is also configured to determine whether the geographic origin of the authorization request matches the geographic location of the at least one mobile device 160 associated with the payment card account received from the mobile device service provider 180.

The mobile device service provider 180 receives and stores in a memory, database, etc. information communicated by a mobile device 160 regarding a current location of the mobile device 160 as determined by the mobile device 160. For example, the location/country of the mobile device 160 can be stored in the memory device 200 of the mobile device service provider 180 the moment the cardholder's/customer's phone is activated in a country/location other than their home country. The mobile device 160 can be provided with an application to open a communication channel or channels to the managing computer software 110, which optionally would permit the user to set controls on the payment card, including controls that are geographically based, as explained above (*e.g*., individual controls, controls based on customer profiles set by the cardholder/customer 150 or issuing bank 120, for instance). Of course, additionally or alternatively, the customer 150 can utilize any internet-based device or other communication path to the managing computer system 110 in setting these controls for card use. The application can also enable or disable the transmission of the location of the mobile device 160. This application can be preloaded on the mobile device 160 by the manufacturer or retailer of the mobile device 160, or downloaded and installed by the customer 150. Further, it is possible that the managing computer system 110 and the geolocation authentication module are located at the card issuer/card holder bank 120.

Below is a description of how data flows between the devices/modules of Figure 1.

A transaction is initiated at a merchant 140, such as a store or service provider or online retailer when the geolocation of the computer being used by the customer 150 is known, etc., and an authorization request is sent from the merchant 140 to the merchant acquirer 130 (Step 1). The authorization request is then forwarded on to the managing computer system 110 by the merchant acquirer 130 (Step 2). It is also possible for the authorization request to be sent to another intermediary device before it is sent to the managing computer system 110 by the merchant acquirer 130. As seen in Figure 1, the authorization request is then sent from the managing computer system 110 to the geolocation authentication module 190 (Step 3). The geolocation authentication module 190 retrieves a mobile number, e.g. mobile phone number that is associated with the customer/cardholder 150 (Step 4). For example, the geolocation authentication module 190 retrieves the customer's/cardholder's mobile number based on the primary account number (PAN) or another associated payment account.

Next, a request for the mobile device's 160 geographic location is sent from the geolocation authentication module 190 to the mobile device service provider 180 (Step 5). For example, the request for the mobile device's 160 geographic location can be via an application programming interface (API). In response to the request, the mobile device service provider 180 searches the memory 200, and sends the geographic location of the mobile device to the geolocation authentication module 190 (Step 6). The geographic location of the mobile device 160 can be pre-stored prior to the request for this location information from the geolocation authentication module 190. Also, the geolocation authentication module 190 can periodically pull geolocation information of particular customers (e.g. people who opt into a service, are people who are identified as possible targets of identity theft, etc.) from the mobile device service provider 180 and store the geolocation information in the memory 220 of the geolocation authentication module 190. That is, either memory 200 or memory 220 can have the current geolocation of the cardholders based on a predetermined pull model. The geographic location of the mobile device 160 can include the mobile country code of the country in which the device is located, the name of the country in which the device is located, or other geographic information specifying the location of the mobile device (e.g., city, county, latitude/longitude, geo-fence, etc.).

Next, the geolocation authentication module 190 matches the geographic location of the mobile device 160 to the geographic origin of the authorization request (Step 7). In an exemplary embodiment, the country of the mobile device 160 is matched to the country in which the Point of Sale (POS) of the merchant is located. The geographic origin of the authorization may "match" the geographic location determined by the mobile device 160 either by determining whether they are within a given distance of one to the other, and may be based on longitude and latitude information or street addresses or other relatively absolute or fixed physical locations. Alternatively or additionally, the geographic origin of the transaction request might match the geographic location of the mobile device 160 if it is in the same local community as the geographic location of the mobile device 160. In this instance, the same local community may be a town, a city, and county or province, as examples. Alternatively or additionally, the geographic origin of the transaction authorization request may match the geographic location of the mobile device if it occurs in the same country, for example, as described above. Further, rules can be set up, based on transaction details (*e.g*., the amount, frequency of use, merchant, merchant category, type of transaction (*e.g*., ATM, POS, etc.), country of origin of the transaction, etc., the sophistication of the transaction equipment and/or communications equipment, the quality and the information being provided, etc., and combinations of these factors) to flexibly match the geographic location with the geographic origin at different levels of specificity depending on these factors. For instance, a small transaction of $10.00 or less, for example, might be approved based on the country in which the mobile device is currently located or was last reported to be located, whereas a more significant transaction of $500.00 would only be approved only if the geographic location of the transaction is located within a radius of several hundred feet of the mobile device location (e.g., the smallest resolution of the location detection circuitry that was reported within a given time period), to provide a couple examples. Various factors, such as the history of issues with a particular merchant, country, customer, size of the transaction, merchant code, or other indicia of the type of transaction, etc. can weigh into the calculation of the potential fraud. As mentioned above, the customer 150 or the issuing bank 120 can set up profiles of these factors, the profiles being selected by the customer 150 or the issuing bank 120, or invoked by location profiles that are triggered when the mobile device 160 and/or the origin of the transaction is within a given geographic location, or combinations thereof.

The authorization request from the merchant 140 includes various data regarding the identity of the payment card account, the type and amount of the transaction, merchant data information, and additionally, the geographic origin of the request for authorization. This geographic origin of the request for authorization may be generated by a merchant terminal (interface) at a fixed location for card-present transactions, or from information received during a transaction regarding the customer's IP (internet protocol) address, computer identification that indicates the location of the computer, such as the customer's home computer or business desk-top computer that the customer had previously identified as being associated or linked with the payment card account, or nearly any other form of information that would tend to identify the geographic origin of the request for authorization. It should be noted that the geographic origin can be determined by the mobile device 160, pre-stored, or entered by the customer or cardholder 150, but includes the actual geographic location of the interface device (e.g., POS) through which the transaction, and therefore the request for authorization, is originated by a customer or cardholder 150.

Next, after the geographic origin of the request is compared with the geographic location of the mobile device 160, data is sent from the geolocation authentication module 190 to the managing computer system 110 of the card issuer/card holder bank 120 that indicates that indicates that the transaction is declined, the transaction is allowed, or the transaction should be reviewed by the issuer, e.g., card issuer/card holder bank 120 (Step 8). As described above, the geolocation authentication module 190 can permit the payment card transaction to be processed for authorization when the geographic origin of an authorization request matches (flexibly or inflexibly) the geographic location determined by the mobile device 160, or alternatively, take action to permit denying the authorization request for the transaction to be processed for authorization when the geographic origin of the request does not match the geographic location of the mobile device 160. It should be noted that in certain embodiments permitting the payment card transaction to be processed might be in the form of taking no actual action to stop the transaction during the authentication process, and thereby allow the transaction to proceed as normal in cases, for example, when, for a particular transaction, customer convenience at the time of the transaction outweighs the risk that fraud may be involved. Thus, exemplary embodiments could be in place where the payment card transaction progresses if the geographic location and geographic origin are not matched because the information was not sufficiently or timely provided. In exemplary embodiments, the action to deny the authorization request may be in the form of simply denying the authorization request directly by sending a denial message to the merchant 140. Alternatively, the geolocation authentication module 190 may send a notification to the payment card account issuer 120 that the authorization should be denied. In the latter instance, the payment card account issuer 120 may decide to authorize the transaction despite the indication that the geographic origin of the authorization request does not match the geographic location of the mobile device. This can be done, for example, by way of a set of rules that may be applicable to the type of payment, the type or history of the merchant and/or customer, the amount of the transaction, the country of origin, other factors as may be appropriate to reduce frustration among customers without incurring additional undue risk for fraudulent transactions, or other factors that may govern the setting of policies and rules by the payment card account issuer 120.

In another embodiment, the geolocation authentication module 190 or the managing computer system 110 is configured to adjust the security measures based on the accuracy of the geographic location of the mobile device, and the more accurate the geographic location of the mobile device 160, the more extreme the measures of security that can be taken. For example, if the accuracy of the geographic location of the mobile device 160 is low, and the location of the mobile device and the location of the transaction do not match, the measure of security taken can be low (e.g., sending a warning message perhaps via text message to the customer and /or authorization entity (e.g., issuing bank) or the like). Alternatively, if the accuracy of the geographic location of the mobile device 160 is high, and the location of the mobile device and the location of the transaction do not match, the measure of security taken can be high (e.g., denying the transaction or indicating it should be denied).

In an exemplary embodiment, the geolocation authentication module 190 of Figure 1 is located at a fraud control center or is hosted by an Electronic Merchant Services (EMS). EMS is a provider of credit card processing. EMS's products and services are designed to process many types of payments, including debit and credit cards for a payment network, Check Guarantee Services, and Payment Gateway Services for e-commerce merchants, loyalty/gift card solutions and POS (Point-Of-Sale) systems.

In another exemplary embodiment, the memory device 200 of the mobile device service provider 180 receives current geographic locations of the plurality of identified mobile devices from transmissions associated with the plurality of identified mobile devices. The storing of the current geographic locations of the plurality of mobile devices and the current geographic location of the at least one mobile device 160 associated with the payment card account in the memory device 200 of the mobile device service provider 180 is preformed prior to the request of the geographic location of the at least one mobile device 160 associated with the payment card account from the memory device 200 of the mobile device service provider 180.

In another exemplary embodiment, when the geographic location of the at least one mobile device 160 associated with the payment card account is requested from the memory device 200 of the mobile device service provider 180, the mobile device service provider 180 does not send a request to the at least one mobile device 160 for the geographic location, but instead replies with its previously stored information, perhaps with an indication of how reliable the data is (e.g., how good it is in relative terms, how long ago the location was determined or updated, etc.). The mobile device 160 may be simultaneously sent an inquiry, or its location otherwise determined, either in response to the authorization request or periodically for the purposes of the mobile device service provider 180.If the new geolocation does not match the POS location within a given time frame, the transaction can be flagged before settlement or the like.

In another exemplary embodiment, the geolocation authentication module 190 is configured to retrieve the geographic location of the at least one mobile device 160 associated with the payment card account from the geolocation authentication module 190 in approximately 50 ms, e.g., within 40 ms to 60 ms. The geolocation authentication module 190 can also be configured to retrieve the geographic location of the at least one mobile device 160 associated with the payment card account from the geolocation authentication module 190 in 50 ms or less.

In another exemplary embodiment, the geolocation authentication module 190 is configured to send a fraud alert short message service (SMS) to at least one mobile device 160 of the customer 150 via the mobile device service provider 180. Lastly, an authorization request is sent from the managing computer system 110 to the card issuer/card holder bank 120. (Step 9) The authorization request is a request for payment for the transaction that occurred at the merchant 140.

### Managing Computer System/Geolocation Authentication Module

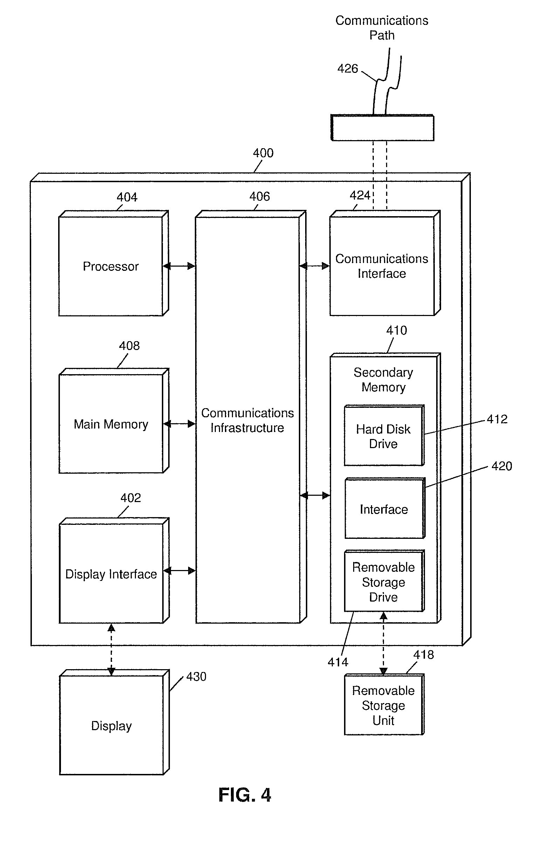

Figure 2 illustrates an embodiment of the managing computer system 110 or the geolocation authentication module 190. It will be apparent to persons having skill in the relevant art that the embodiment of the managing computer system 110 or geolocation authentication module illustrated in Figure 2 is provided as illustration only and may not be exhaustive to all possible configurations of the managing computer system 110 or geolocation authentication module 190 suitable for performing the functions as discussed herein. For example, the computer system 400 illustrated in Figure 4 and discussed in more detail below may be a suitable configuration of the managing computer system 110 or the geolocation authentication module 190.

The managing computer system 110 may include a receiving unit 202. The receiving unit 202 may be configured to interface (e.g., connect, communicate, etc.) with one or more networks in order to receive data, information, etc. The receiving unit 202 may receive the authorization request from the merchant acquirer 130, and may also receive data for including in the transaction data entries of the transaction database 104, such as transaction data 208 (e.g., from a payment network), consumer information 210 (e.g., from the customer, the issuer, a demographic tracking agency, etc.), merchant information 212, and geographic locations 214 of points of sale, for instance the country of origin.

The managing computer system 110 may also include a processing unit 204. The processing unit 204 may be in the form of a stand-alone computer, a distributed computing system, a centralized computing system, a network server with communication modules and other processors, or nearly any other automated information processing system configured to receive requests from merchants 140, typically through a merchant acquirer 130 though not necessarily so depending on the card processing network, for authorization of payment card transactions against a payment card account of a customer 150. The processing unit 204 may be configured to identify and/or analyze the data received via the receiving unit 202, such as data related to payment transactions. The processing unit 204 may store the received data in the transaction database 104 in one or more corresponding transaction data entries. As discussed above, each transaction data entry may include at least transaction data 208, consumer information 210, merchant information 212, and a geographic location 214.

The transaction data 208 may include data related to the payment transaction, such as transaction amount, transaction time and/or date, payment method, payment information, product information, or any other data suitable for the calculation of characteristic metrics based thereon as will be apparent to persons having skill in the relevant art.

The merchant information 212 may include information associated with a merchant involved in the related payment transaction, such as merchant name, merchant location, merchant industry, merchant category code, merchant identification number, or any other suitable information that will be apparent to persons having skill in the relevant art. This information can be transmitted with the authorization request or looked up in accessible databases. In an exemplary embodiment, the merchant information 212 may not include any potentially identifiable information to individually identify the associated merchant.

The geographic location 214 included in each transaction data entry may be the geographic location where the related payment transaction took place. The geographic location 214 may be represented in any format suitable for use in performing the functions discussed herein, such as latitude and longitude, street address, zip or postal code, etc.

### Financial Transaction Method

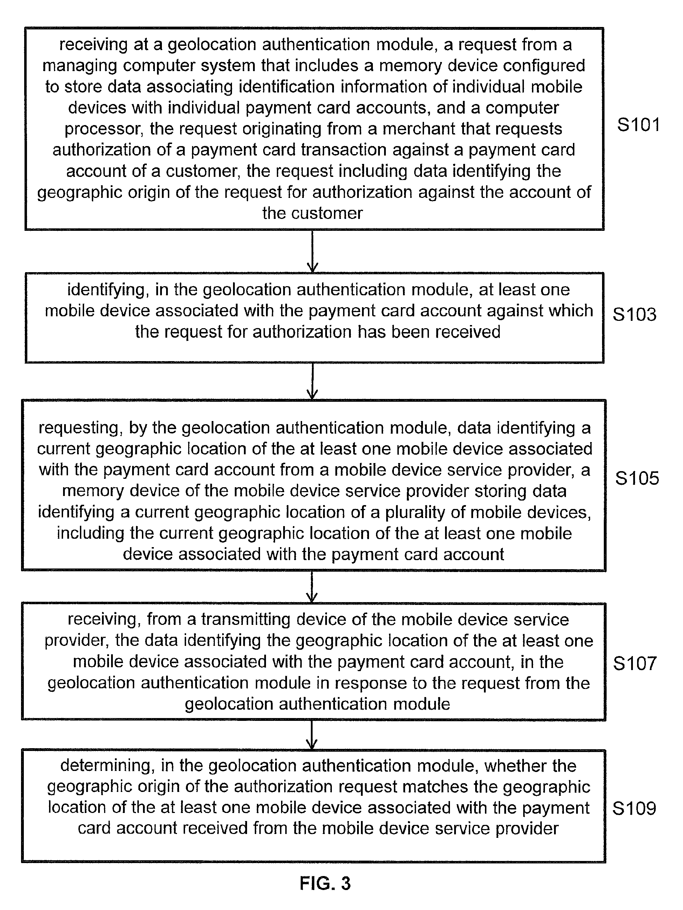

Turning now to Figure 3, which depicts an exemplary financial transaction method for fraud control via geolocation in accordance with the present disclosure. Step S101 of the financial transaction method includes receiving at the geolocation authentication module 190, a request from the managing computer system 110 that includes the memory device 230 configured to store data associating identification information of individual mobile devices with individual payment card accounts, and a computer processor, the request originating from a merchant 140 or its acquirer 130 that requests authorization of a payment card transaction against a payment card account of a customer 150, the request including data identifying or data sufficient to look up the geographic origin of the request for authorization against the payment card account of the customer 150.

Step S103 includes identifying, in the geolocation authentication module 190, at least one mobile device 160 associated with the payment card account against which the request for authorization has been received.

Step S105 includes requesting, by the geolocation authentication module 190, data identifying a current geographic location of the at least one mobile device 160 associated with the payment card account from the mobile device service provider 180, the memory device 200 of the mobile device service provider 180 storing data identifying a current geographic location of a plurality of mobile devices, including the current geographic location of the at least one mobile device 160 associated with the payment card account. To be clear, it is possible for a card holder to have multiple mobile devices registered against multiple card numbers. In a preferred embodiment, if the geolocation of any one of the mobile devices matches the geolocation of the point of sale, then authorization is granted.

Step S107 includes receiving, from a transmitting device of the mobile device service provider 180, the data identifying the geographic location of the at least one mobile device 160 associated with the payment card account, in the geolocation authentication module 190 in response to the request from the geolocation authentication module 190.

Lastly, step S109 includes determining, in the geolocation authentication module 190, whether the geographic origin of the authorization request matches the geographic location of the at least one mobile device 160 associated with the payment card account received from the mobile device service provider 180.

### Computer System Architecture

Turning now to Figure 4, illustrated is a computer system 400 in which embodiments of the present disclosure, or portions thereof, may be implemented as computer-readable code compiled on a computer, thus making it a specific purpose computer. For example, the geolocation authentication module 190, the managing computer system 110, or the mobile device service provider 180 of Figure 1 may be implemented in the computer system 400 using hardware, software, firmware, non-transitory computer readable media having instructions stored thereon, or a combination thereof, and may be implemented in one or more computer systems or other processing systems. Hardware, software, or any combination thereof may embody modules and components used to implement the method of Figure 3.

If programmable logic is used, such logic may execute on a commercially available processing platform or a special purpose device. A person having ordinary skill in the art may appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device. For instance, at least one processor device and a memory may be used to implement the above described embodiments.

A processor device as discussed herein may be a single processor, a plurality of processors, or combinations thereof. Processor devices may have one or more processor "cores." The terms "computer program medium," "non-transitory computer readable medium," and "computer usable medium" as discussed herein are used to generally refer to tangible media such as a removable storage unit 418, and a hard disk installed in hard disk drive 412.

Various embodiments of the present disclosure are described in terms of this exemplary computer system 400. After reading this description, it will become apparent to a person skilled in the relevant art how to implement the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

Processor device 404 may be a special purpose or a general purpose processor device. The processor device 404 may be connected to a communication infrastructure 406, such as a bus, message queue, network, multi-core message-passing scheme, etc. The network may be any network suitable for performing the functions as disclosed herein and may include a local area network (LAN), a wide area network (WAN), a wireless network (e.g., WiFi), a mobile communication network, a satellite network, the Internet, fiber optic, coaxial cable, infrared, radio frequency (RF), or any combination thereof. Other suitable network types and configurations will be apparent to persons having skill in the relevant art. The computer system 400 may also include a main memory 408 (e.g., random access memory, read-only memory, etc.), and may also include a secondary memory 410. The secondary memory 410 may include the hard disk drive 412 and a removable storage drive 414, such as a floppy disk drive, a magnetic tape drive, an optical disk drive, a flash memory, etc.

The removable storage drive 414 may read from and/or write to the removable storage unit 418 in a well-known manner. The removable storage unit 418 may include a removable storage media that may be read by and written to by the removable storage drive 414. For example, if the removable storage drive 414 is a floppy disk drive, the removable storage unit 418 may be a floppy disk. In one embodiment, the removable storage unit 418 may be non-transitory computer readable recording media.

In some embodiments, the secondary memory 410 may include alternative means for allowing computer programs or other instructions to be loaded into the computer system 400, for example, the removable storage unit 418 and an interface 420. Examples of such means may include a program cartridge and cartridge interface (e.g., as found in video game systems), a removable memory chip (e.g., EEPROM, PROM, etc.) and associated socket, and other removable storage units 418 and interfaces 420 as will be apparent to persons having skill in the relevant art.

Data stored in the computer system 400 (e.g., in the main memory 408 and/or the secondary memory 410) may be stored on any type of suitable computer readable media, such as optical storage (e.g., a compact disc, digital versatile disc, Blu-ray disc, etc.) or magnetic tape storage (e.g., a hard disk drive). The data may be configured in any type of suitable database configuration, such as a relational database, a structured query language (SQL) database, a distributed database, an object database, etc. Suitable configurations and storage types will be apparent to persons having skill in the relevant art.

The computer system 400 may also include a communications interface 424. The communications interface 424 may be configured to allow software and data to be transferred between the computer system 400 and external devices. Exemplary communications interfaces 424 may include a modem, a network interface (e.g., an Ethernet card), a communications port, a PCMCIA slot and card, etc. Software and data transferred via the communications interface 424 may be in the form of signals, which may be electronic, electromagnetic, optical, or other signals as will be apparent to persons having skill in the relevant art. The signals may travel via a communications path 426, which may be configured to carry the signals and may be implemented using wire, cable, fiber optics, a phone line, a cellular phone link, a radio frequency link, etc.

Computer program medium and computer usable medium may refer to memories, such as the main memory 408 and secondary memory 410, which may be memory semiconductors (e.g., DRAMs, etc.). These computer program products may be means for providing software to the computer system 400. Computer programs (e.g., computer control logic) may be stored in the main memory 408 and/or the secondary memory 410. Computer programs may also be received via the communications interface 424. Such computer programs, when executed, may enable computer system 400 to implement the present methods as discussed herein. In particular, the computer programs, when executed, may enable processor device 404 to implement the method illustrated by Figure 3 or a similar method, as discussed herein. Accordingly, such computer programs may represent controllers of the computer system 400. Where the present disclosure is implemented using software, the software may be stored in a computer program product or computer readable medium and loaded into the computer system 400 using the removable storage drive 414, interface 420, hard disk drive 412, or communications interface 424. Lastly, the computer system 400 may also include a display interface 402 that outputs display signals to a display unit 430, e.g., LCD screen, plasma screen, LED screen, DLP screen, CRT screen, etc.

While various exemplary embodiments of the disclosed system and method have been described above, it should be understood that they have been presented for purposes of example only, not limitations. It is not exhaustive and does not limit the disclosure to the precise form disclosed. Modifications and variations are possible in light of the above teachings or may be acquired from practicing of the disclosure, without departing from the breadth or scope.

As can be seen above, the location controls on payment card transactions can be implemented in any number of ways as discussed above, or as will become apparent to those skilled in the art after reading this disclosure. These embodiments, as well as variations and modifications thereof that will occur to those skilled in the art, are encompassed by the financial transaction method involving location controls. Hence, the scope of the method and system for implementing the presently disclosed location controls on payment card transaction is limited only by the meets and bounds as articulated in the claims appended hereto.

## Claims

1. A financial transaction method, comprising:
receiving at a geolocation authentication module, a request from a managing computer system that includes a memory device configured to store data associating identification information of individual mobile devices with individual payment card accounts, and a computer processor, the request originating from a merchant that requests authorization of a payment card transaction against a payment card account of a customer, and the request includes data identifying the geographic origin of the request for authorization against the payment card account of the customer;
identifying, in the geolocation authentication module, at least one mobile device associated with the payment card account against which the request for authorization has been received;
requesting, by the geolocation authentication module, data identifying a current geographic location of the at least one mobile device associated with the payment card account from a mobile device service provider, a memory device of the mobile device service provider storing data identifying a current geographic location of a plurality of mobile devices, including the current geographic location of the at least one mobile device associated with the payment card account;
receiving, from a transmitting device of the mobile device service provider, the data identifying the geographic location of the at least one mobile device associated with the payment card account, in the geolocation authentication module in response to the request from the geolocation authentication module; and
determining, in the geolocation authentication module, whether the geographic origin of the authorization request matches the geographic location of the at least one mobile device associated with the payment card account received from the mobile device service provider.

2. The financial transaction method of claim 1, further comprising:
permitting the payment card transaction to be processed for authorization when the geographic origin of the authorization request matches the geographic location of the at least one mobile device.

3. The financial transaction method of claim 2, further comprising:
taking action to permit denying of the authorization request for the transaction to be processed for authorization when the geographic origin of the request does not match the geographic location of the at least one mobile device.

4. The financial transaction method of claim 1, wherein the geolocation authentication module is located at a fraud control center.

5. The financial transaction method of claim 1, wherein the geolocation authentication module is hosted by Electronic Merchant Services (EMS).

6. The financial transaction method of claim 1, wherein the storing of the current geographic locations of the plurality of mobile devices and the current geographic location of the at least one mobile device associated with the payment card account in the memory device of the mobile device service provider is preformed prior to the requesting of the geographic location of the at least one mobile device associated with the payment card account from the memory device of the mobile device service provider.

7. The financial transaction method of claim 1, wherein when the geographic location of the at least one mobile device associated with the payment card account is requested from the memory device of the mobile device service provider, the mobile service provider does not send a request to the at least one mobile device for the geographic location.

8. The financial transaction method of claim 1, further comprising:
sending a fraud alert SMS to at least one mobile device of the customer from the geolocation authentication module via the mobile device service provider.

9. A financial transaction system, comprising:
a managing computer system that includes a memory device configured to store data associating identification information of individual mobile devices with individual payment card accounts, and a computer processor;
a mobile device service provider, including a memory device configured to store data identifying a current geographic location of a plurality of mobile devices, including a geographic location of at least one mobile device associated with a payment card account of a customer; and
a geolocation authentication module configured to:
receive a request from the managing computer system, the request originating from a merchant that requests authorization of a payment card transaction against the payment card account of the customer, and the request includes data identifying the geographic origin of the request for authorization against the payment card account of the customer;
identify the at least one mobile device associated with the payment card account against which the request for authorization has been received;
request the data identifying the current geographic location of the at least one mobile device associated with the payment card account from the mobile device service provider;
receive, from a transmitting device of the mobile device service provider, the data identifying the geographic location of the at least one mobile device associated with the payment card account, in response to the request; and
determine whether the geographic origin of the authorization request matches the geographic location of the at least one mobile device associated with the payment card account received from the mobile device service provider.

10. The financial transaction system of claim 9, wherein the geolocation authentication module is further configured to permit the payment card transaction to be processed for authorization when the geographic origin of the authorization request matches the geographic location of the at least one mobile device.

11. The financial transaction system of claim 10, wherein the geolocation authentication module is further configured to take action to permit denying of the authorization request for the transaction to be processed for authorization when the geographic origin of the request does not match the geographic location of the at least one mobile device.

12. The financial transaction system of claim 9, wherein the geolocation authentication module is located at a fraud control center.

13. The financial transaction system of claim 9, wherein the geolocation authentication module is hosted by Electronic Merchant Services (EMS).

14. The financial transaction system of claim 9, wherein storing of the current geographic locations of the plurality of mobile devices and the current geographic location of the at least one mobile device associated with the payment card account in the memory device of the mobile device service provider is preformed prior to the request of the geographic location of the at least one mobile device associated with the payment card account from the memory device of the mobile device service provider.

15. The financial transaction system of claim 9, wherein when the geographic location of the at least one mobile device associated with the payment card account is requested from the memory device of the mobile device service provider, the mobile service provider does not send a request to the at least one mobile device for the geographic location.

16. The financial transaction system of claim 9, wherein the geolocation authentication module is configured to send a fraud alert SMS to at least one mobile device of the customer via the mobile device service provider.
